# EUROPÄISCHE PATENTSCHRIFT

(11) **EP 1 529 202 B1**
(45) Veröffentlichungstag und Bekanntmachung des Hinweises auf die Patenterteilung: **13.06.2012**
(21) Anmeldenummer: 03738124.1
(22) Anmeldetag: 18.07.2003
(51) Int. Cl.: G01F 23/296, G01N 9/00, G01N 11/16

(54) **VORRICHTUNG ZUR ÜBERWACHUNG EINES VORBESTIMMTEN FÜLLSTANDS EINES MESSMEDIUMS IN EINEM BEHÄLTER**
DEVICE FOR MONITORING A PREDETERMINED FILLING LEVEL OF A MEASURING MEDIUM IN A CONTAINER
DISPOSITIF POUR SURVEILLER UN ETAT DE REMPLISSAGE PREDEFINI D'UN MILIEU A MESURER DANS UN RECIPIENT

(30) Priorität: 14.08.2002 DE 10237931
(43) Veröffentlichungstag der Anmeldung: 11.05.2005
(73) Patentinhaber: Endress + Hauser GmbH + Co. KG, 79689 Maulburg (DE)
(72) Erfinder: MÜLLER, Alexander, 79361 Sasbach-Jechtingen (DE); D'ANGELICO, Sascha, 79588 Efringen-Kirchen (DE)
(74) Vertreter: Andres, Angelika Maria
(86) Internationale Anmeldenummer: PCT/EP2003/007841
(87) Internationale Veröffentlichungsnummer: WO 2004/018974

(56) Entgegenhaltungen:
- EP-A- 0 568 521
- DE-A- 10 057 974
- DE-A- 10 063 718
- DE-A- 10 161 071
- DE-A- 10 161 072
- US-A- 5 895 848

## Beschreibung

Die Erfindung bezieht sich auf eine Vorrichtung zur Überwachung eines vorbestimmten Füllstands bzw. zur Bestimmung der Dichte oder der Viskosität eines Meßmediums in einem Behälter. Bei dem Meßmedium kann es sich um ein fluides Medium, um Schaum oder um ein festes Medium handeln.

Die Vorrichtung weist eine schwingfähige Einheit, eine Antriebs-/Empfangseinheit und eine Auswerteeinheit auf. Die schwingfähige Einheit ist je nach Anwendungsfall auf der Höhe des vorbestimmten Füllstandes angebracht oder sie ist so positioniert, daß sie bis zu einer definierten Eintauchtiefe in das Meßmedium eintaucht. Weiterhin ist eine Rückkoppelelektronik vorgesehen, die der Antriebs-/Empfangseinheit die Signale zur Anregung der schwingfähigen Einheit liefert. Die Rückkoppelelektronik besteht bevorzugt aus einer Grundwellenanregung, wie sie bereits aus dem Stand der Technik bekannt geworden ist. Insbesondere sei an dieser Stelle auf die vom LIQUIPHNT M bekannt gewordene Grundwellenanregung verwiesen.

Anhand einer Frequenz- und/oder Amplitudenänderung der Schwingung der schwingfähigen Einheit ermittelt die Auswerteeinheit das Erreichen des vorbestimmten Füllstandes. Im Falle einer Dichte- oder Viskositätsmessung ermittelt die Auswerteeinheit die Dichte bzw. die Viskosität des Meßmediums in Abhängigkeit von einer Änderung der Schwingung der schwingfähigen Einheit.

Es sind bereits Vorrichtungen mit einer schwingfähigen Einheit, sog. Vibrationsdetektoren, zur Detektion bzw. zur Überwachung des Füllstandes eines Mediums in einem Behälter bekannt geworden. Bei der schwingfähigen Einheit handelt es sich üblicherweise um zumindest einen Schwingstab, der an einer Membran befestigt ist. Die Membran wird über einen elektromechanischen Wandler, z. B. ein piezoelektrisches Element, zu Schwingungen angeregt. Aufgrund der Schwingungen der Membran führt auch die an der Membran befestigte schwingfähige Einheit Schwingungen aus. Vibrationsdetektoren der zuvor beschriebenen Art werden von der Anmelderin unter der Bezeichnung 'LIQUIPHANT' hergestellt und vertrieben.

Als Füllstandsmeßgeräte ausgebildete Vibrationsdetektoren nutzen den Effekt aus, daß die Schwingungsfrequenz und die Schwingungsamplitude abhängig sind von dem jeweiligen Bedeckungsgrad der schwingfähigen Einheit: Während die schwingfähige Einheit in Luft frei und ungedämpft ihre (Resonanz-) Schwingungen ausführen kann, erfährt sie eine Frequenz- und Amplitudenänderung, also eine Verstimmung, sobald sie teilweise oder vollständig in das Meßmedium eintaucht. Anhand einer vorbestimmten Frequenzänderung (üblicherweise wird zur Füllstandserkennung die Frequenz detektiert) läßt sich folglich ein eindeutiger Rückschluß auf das Erreichen des vorbestimmten Füllstandes des Mediums in dem Behälter ziehen. Füllstandsmeßgeräte werden übrigens vornehmlich als Überfüllsicherungen oder zum Zwecke des Pumpenleerlaufschutzes verwendet.

Darüber hinaus wird die Frequenz der Schwingung der schwingfähigen Einheit auch von der Dichte des Mediums beeinflußt. Daher besteht bei konstantem Bedeckungsgrad eine funktionale Beziehung zwischen der Frequenzänderung und der Dichte des Mediums, so daß Vibrationsdetektoren sowohl für die Füllstands- als auch für die Dichtebestimmung bestens geeignet sind.

In der Praxis werden zwecks Überwachung und Erkennung des Füllstandes bzw. der Dichte oder der Viskosität des Mediums in dem Behälter die Schwingungen der Membran aufgenommen und mittels zumindest eines piezoelektrischen Elements in elektrische Antwortsignale umgewandelt. Die elektrischen Antwortsignale werden anschließend von einer Auswerteeinheit ausgewertet. Im Falle der Füllstandsbestimmung überwacht die Auswerteeinheit die Schwingungsfrequenz und/oder die Schwingungsamplitude der schwingfähigen Einheit und signalisiert den Zustand 'Sensor bedeckt' bzw. 'Sensor unbedeckt', sobald die Meßwerte einen vorgegebenen Referenzwert unter- oder überschreiten. Eine entsprechende Meldung an das Bedienpersonal kann auf optischem und/oder auf akustischem Weg erfolgen. Alternativ oder zusätzlich wird ein Schaltvorgang ausgelöst; so wird etwa ein Zu- oder Ablaufventil an dem Behälter geöffnet oder geschlossen.

Aus der WO 02/31471 A2 ist darüber hinaus eine Vorrichtung zur Messung und/oder Überwachung der Viskosität eines Meßmediums bekannt geworden. Die Vorrichtunbg besteht auch hier aus einer schwingfähigen Einheit, die an einer Membran festgemacht ist, aus einer Antriebs-/Empfangseinheit und einer Regel-/Auswerteeinheit. Die Regel-/Auswerteeinheit bestimmt anhand der Frequenz-Phase-Kurve die Viskosität des Meßmediums. Insbesondere stellt die Regel-/Auswerteeeinheit zwei voneinander hinreichend verschiedene Phasenwerte ein, bestimmt die den Phasen zugeordneten Frequenzen bzw. die entsprechende Frequenzänderung der Schwingungen der schwingfähigen Einheit, vergleicht die ermittelte Frequenzänderung mit abgespeicherten Sollwerten und bestimmt so die Viskosität des Meßmediums.

In der Offenlegungsschrift DE 100 63 718 A1 ist ein vibronisches Füllstandsmessgerät beschrieben, dessen piezoelektrischer Sensor von einer Ansteuerschaltung gesteuert wird. In der Ansteuerschaltung ist ein Mikrocontroller enthalten, welcher das Ansteuersignal derart regelt, dass die Amplitude des vom Sensor erfassten Signals konstant gehalten wird.

Die Offenlegungsschrift DE 100 57 974 A1 beschreibt ein vibronisches Messgerät zur Füllstands- und Dichtemessung, welches eine Störgröße ermittelt und deren Einfluss auf die Bestimmung der Messgröße eliminiert. Beispielsweise wird dies durch Einstellen der Phasenverschiebung zwischen Erregersignal und Empfangssignal auf einen von der Störgröße abhängigen Wert erzielt.

In der US-Patentschrift 5,895,848 ist ebenfalls ein vibronisches Füllstandsmessgerät offenbart. Die vorliegende Phasenverschiebung zwischen Erregersignal und Empfangssignal wird überwacht und die Erregerfrequenz von analogen Bauteilen derart geregelt, dass die Phasenverschiebung stets 90° beträgt.

Aus der Offenlegungsschrift EP 0 568 521 A1 ist eine Vorrichtung zur Bestimmung der Dichte bekannt, welche einen mit der Probe befüllbaren Schwinger aufweist. Der Schwinger ist zu Schwingungen in der Grundmode und der ersten Obermode anregbar. Ein Mikroprozessor wertet die Schwingungen aus und bestimmt die Dichte. Weiterhin ist über den Mikroprozessor eine Änderung der Phasenlage um 180° erzeugbar.

Der Erfindung liegt die Aufgabe zugrunde, eine Vorrichtung zur Füllstands-und/oder Dichte- oder Viskositätsmessung vorzuschlagen, die einen konstanten Phasengang über eine große Frequenz-Bandbreite (Arbeitsbereich) aufweist.

Die Aufgabe wird dadurch gelöst, daß ein Mikroprozessor vorgesehen ist, daß die schwingfähige Einheit, die Rückkoppelelektronik und der Mikroprozessor einen Schwingkreis bilden, und daß der Mikroprozessor ein phasenkorrigiertes Ausgangssignal erzeugt, wobei der Mikroprozessor die Phase des Ausgangssignals der Rückkoppelelektronik über eine vorgegebene Frequenz-Bandbreite derart korrigiert, daß das Ausgangssignal des Mikroprozessors eine aus der Summe der Phase des Ausgangssignals der Rückkoppelelektronik (9) und eines Phasenkorrekturwertes des Mikroprozessors (8) gebildete Phase aufweist, welche einer von der Schwingfrequenz abhängigen vorgegebenen Funktion f(v) folgt. Bei der Rückkoppelelektronik handelt es sich z. B. um eine analoge Rückkoppelelektronik, wie sie in dem von der Anmelderin angebotenen und vertriebenen LIQUIPHANT M zum Einsatz kommt. Es versteht sich von selbst, daß die Erfindung nicht auf diese besondere Form der Rückkoppelelektronik beschränkt ist.

Durch die erfindungsgemäße Integration des Mikroprozessors in den Schwingkreis ist es möglich, einen Vibrationsdetektor auf 'intelligente' Art und Weise so zu beeinflußen, daß er über über einen ausgedehnten Arbeitsbereich einen konstanten Phasengang aufweist. Darüber hinaus ist er an die unterschiedlichsten Gegebenheiten und Anforderungen am Meßort beliebig anpaßbar. Weiterhin kann die erfindungsgemäße Vorrichtung als sog. Multivariabler Sensor bei der Bestimmung des Füllstands ebenso eingesetzt werden wie bei der Viskositäts- oder Dichtemessung.

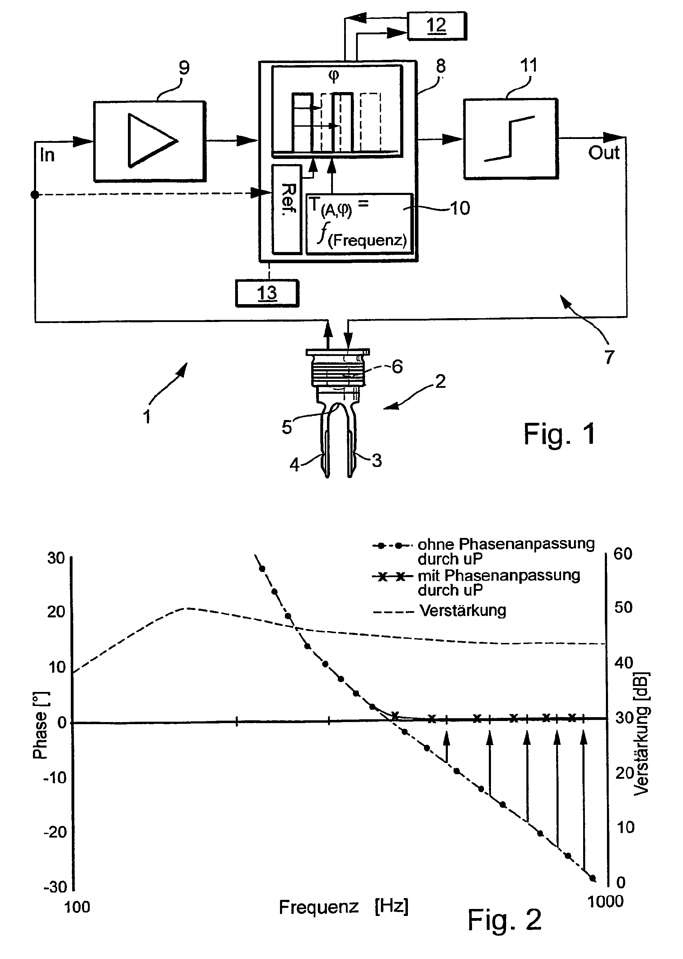

Gemäß einer vorteilhaften Weiterbildung der erfindungsgmäßen Vorrichtung liegt die Frequenz-Bandbreite in den Grenzen von 300 bis 1500 Hz. Die Rückkoppelelektronik hat desweiteren die Aufgabe - im Falle eines Ausfalls der Antriebs-/Empfangseinheit - eine Signalisierung mittels der der Rückkoppelelektronik eigenen Resonanzfrequenz zu erzeugen (siehe Amplitudenverhalten in Fig.2). Diese Frequenz liegt außerhalb der Frequenz-Bandbreite des multivariablen Sensors.

Eine günstige Ausgestaltung der erfindungsgemäßen Vorrichtung sieht vor, daß dem Mikroprozessor eine Speichereinheit zugeordnet ist, in der ein Korrekturwert für die Phase in Abhängigkeit von der Frequenz der Schwingung abgespeichert sind. Insbesondere sind die Korrekturwerte für die Phase in Form einer Tabelle oder in Form einer oder mehrerer Funktionen in der Speichereinheit verfügbar. Letzterer Fall tritt auf, wenn zusätzliche Prozeßgrößen, die den Phasengang der Rückkoppelelektronik beeinflussen, z.B. die Temmperatur am Meßort, berücksichtigt werden.

Um eine optimale Arbeitsweise der erfindungsgemäßen Vorrichtung sicherzustellen, sorgt der Mikroprozessor beispielsweise dafür, daß im gesamten Arbeitsbereich die Funktion f(v) einen konstanten Wert annimmt. Der konstante Wert kann beispielsweise 0° betragen. Je nach Applikationsfall kann die Summe der Phasen von Rückkkoppelelektronik und Mikroprozessor auch einen von Null verschiedenen konstanten Wert aufweisen. Prinzipiell kann die Konstante, die die Summe der Phasen repräsentiert, jeden Wert zwischen -180 ° bis + 180 ° annehmen.

Durch diese Ausgestaltung ist es beispielsweise möglich, auf die durch Schaum veränderten Bedingungen am Meßort zu reagieren. Ebenso ist es möglich, den Schaum unter bestimmten Voraussetzungen von dem flüssigen Meßmedium zu unterscheiden. Desweiteren ist eine frei veränderliche Phase - wie bereits an vorhergehender Stelle erwähnt - eine unabdingbare Voraussetzung für die Viskositätsmessung.

Betrachten wir folgende Beispiele: Ein Grenzwertschalter wird als Überfüllsicherung in einem Behälter eingesetzt, in dem ein flüssiges, stark schäumendes Meßmedium gelagert ist. In einem solchen Fall muß der Grenzschalter bereits dann ein Schaltsignal ausgeben, wenn der Schaum mit der schwingfähigen Einheit in Kontakt kommt und nicht erst, wenn die schwingfähige Einheit in das flüssige Meßmedium eintaucht. Um ein Ansprechen des Grenzstandsensors auf den Schaum sicherzustellen, wird die Summe der Phasen der Rückkoppelelektronik und des Mikroprozessors auf einen von Null verschiedenen Wert, z. B. auf +50 ° eingestellt. Weiterhin kann eine optimierte Anpassung für den Fall erfolgen, daß der Grenzwertschalter als Trockenlaufschutz eingesetzt wird, z.B. auf -20°. In einem solchen Fall ist der Schaltpunkt des Grenzschalters so eingestellt, daß der Schaum ignoriert wird.

Gemäß einer günstigen Weiterbildung der erfindungsgemäßen Vorrichtung ist eine Eingabe-/Anzeigeeinheit vorgesehen, an der die Funktion f(v) vorgebbar ist. Damit ist es möglich, je nach Anwendungsfall eine Dichte- , Viskositäts-oder Schaummessung zu ermöglichen, ohne daß an den einzelnen Komponenten des Elektronikteils irgendwelche Hardware-Anpassungen notwendig sind. Es versteht sich, daß die Datenkommunikation anstelle der Vororteingabe z.B. über einen Feldbus erfolgen kann.

Bevorzugt stellt die Rückkoppelektronik dem Mikroprozessor ein periodisches, vorzugsweise ein rechteckförmiges Signal zur Verfügung, das von dem Mikroprozessor zur Bestimmung eines Korrekturwerts für die Phase verwendet wird. Damit wird erreicht, daß das vom Mikroprozessor kommende Signal nicht A/D gewandelt und im Frequenzbereich gefiltert werden muß. Vielmehr wird das vom Mikroprozessor kommende Signal im Zeitbereich verarbeitet. Aus diesem Grund kann ein kostengünstiger Mikroprozessor zum Einsatz kommen, da keine A/D-Wandlung mit einer rechenaufwendigen Filterung im Frequenzbereich notwendig ist.

Insbesondere führt der Mikroprozessor die folgenden Schritte aus: In einem ersten Schritt bestimmt der Mikroprozessor anhand der Flanken, z.B. anhand der aufsteigenden Flanken des rechteckförmigen Eingangssignals die Frequenz des Schwingkreises; anschließend ordnet der Mikroprozessor der ermittelten Frequenz den entsprechenden, abgespeicherten Korrekturwert für die Phase zu; in einem dritten Schritt veranlaßt der Mikroprozessor die Ausgabe eines Ausgangssignals mit der unter Schritt zwei ermittelten korrigierten Phase. Damit erfolgt die Regelung im Schwingkreis auf den vorgebbaren oder vorgegebenen Phasengang nahezu in Echtzeit.

Weiterhin wird vorgeschlagen, daß der Mikroprozessor die Frequenz über mehrere Perioden des Eingangssignals ermittelt und eine Frequenzgewichtung vornimmt. Es zeigt sich in der Praxis, daß der Mikroprozessor in Abhängigkeit von der Qualität des Signals über eine Vielzahl von Perioden nicht immer dieselbe Frequenz ermittelt. An diesem Punkt setzt eine Frequenzgewichtung ein. Falls es aus z.B. applikationstechnischen Gründen sinvoll ist, die schwingfähige Einheit zu kleineren Frequenzen hin zu zwingen, so kann der Mikroprozessor anhand der zuletzt gemessenen Perioden die kleinste der ermittelten Frequenzen ausgeben. Es versteht sich von selbst, daß auch andere applikationstechnische Gegebenheiten durch entsprechende Vorgabe am Mikroprozessor berücksichtigt werden können. Es kann z.B. über mehrere Perioden eine Frequenzmittelung durchgeführt werden, oder es wird die größte bestimmte Frequenz ausgewählt und zur Verstärkung dem nachfolgend genannten Booster zugeführt.

Gemäß einer vorteilhaften Weiterbildung der erfindungsgemäßen Vorrichtung ist eine Verstärkerschaltung (→ Booster) vorgesehen, über die das Ausgangssignale des Mikroprozessors der Antriebseinheit für die schwingfähige Einheit zugeleitet werden.

Eine bevorzugte Ausgestaltung der erfindungsgemäßen Vorrichtung sieht vor, daß der Mikroprozessor zusätzlich die Aufgaben der Auswerteeinheit übernimmt und das Erreichen des vorbestimmten Füllstands ermittelt oder die Viskosität, die Dichte oder die Schaumbildung des Meßmediums bestimmt und signalisiert.

Eine vorteilhafte Weiterbildung der erfindungsgemäßen Vorrichtung sieht vor, daß die Rückkoppelelektronik dem Mikroprozessor ein Signal zur Verfügung stellt, das amplitudenproportional zum Eingangssignal ist. Wichtig ist diese Ausgestaltung, wenn es sich bei dem Meßmedium um ein festes Medium handelt. So wird z.B. bei dem von der Anmelderin angebotenen und vertriebenen SOLIPHANT die Amplituden- und nicht die Frequenzänderung zwecks Erkennung und/oder Überwachung des Füllstands ausgewertet. Darüber hinaus ist ein Sensor zur Messung einer Prozeßgröße, z. B. ein Temperatursensor vorgesehen ist, der dem Mikroprozessor Information hinsichtlich der Prozeßgröße, z. B. hinsichtlich der Temperatur bereitstellt, und daß der Mikroprozessor den Einfluß der Prozeßgröße bei der Bereitstellung des Korrekturwertes für die Phase berücksichtigt.

Die Erfindung wird anhand der nachfolgenden Zeichnungen näher erläutert. Es zeigt:
Fig. 1: ein Blockschaltbild der erfindungsgemäßen Vorrichtung und
Fig. 2: eine graphische Darstellung des Verlaufs der Phase, der korrigierten Phase und der Verstärung aufgetragen gegen die Frequenz.

Fig. 1 zeigt ein Blockschaltbild der erfindungsgemäßen Vorrichtung. Bei der erfindungsgemäßen Vorrichtung handelt es sich um einen Grenzschalter. Die in der Fig. 1 gezeigte Vorrichtung 1 ist selbstverständlich auch - wie bereits an vorhergehender Stelle erläutert - zur Bestimmung der Dichte oder der Viskosität eines in einem Behälter befindlichen Meßmediums geeignet. Behälter und Meßmedium sind in der Fig. 1 nicht gesondert dargestellt. Während im Fall der Füllstandsbestimmung die schwingfähige Einheit 2 nur bei Erreichen des detektierten Grenzfüllstandes in das Meßmedium bzw. nicht in das Meßmedium eintaucht, muß sie zwecks Überwachung bzw. Bestimmung der Dichte oder der Viskosität kontinuierlich bis zu einer vorbestimmten Eintauchtiefe mit dem Meßmedium in Kontakt sein. Bei dem Behälter kann es sich natürlich auch um ein Rohr handeln, das von dem Medium durchflossen wird.

Der Sensor weist ein Gehäuse auf, das an seinem in den Behälter hineinragenden Endbereich von der Membran 5 abgeschlossen ist. Die Membran 5 ist in ihrem Randbereich in das Gehäuse eingespannt. An der Membran 5 ist die in den Behälter ragende schwingfähige Einheit 2 befestigt. Im dargestellten Fall hat die schwingfähige Einheit 2 die Ausgestaltung einer Stimmgabel, umfaßt also zwei voneinander beabstandete, auf der Membran 5 befestigte und in den Behälter hineinragende Schwingstäbe 3, 4.

Die Membran 5 wird von der Antriebs-/Empfangseinheit 6 in Schwingungen mit einer vorgegebenen Erregerfrequenz versetzt. Bei der Antriebs-/Empfangseinheit 6 handelt es sich z. B. um einen Stapelantrieb oder um einen Bimorphantrieb. Beide Arten von piezoelektrischen Antrieben sind aus dem Stand der Technik hinreichend bekannt, so daß an dieser Stelle auf ihre Beschreibung verzichtet werden kann. Aufgrund der Schwingungen der Membran 5 führt auch die schwingfähige Einheit 2 Schwingungen aus, wobei die Schwingfrequenz unterschiedlich ist, wenn die schwingfähige Einheit 2 mit dem Meßmedium in Kontakt ist und so beim Schwingen die Masse des anhängenden Meßmediums mitbewegen muß, oder wenn die schwingfähige Einheit 2 frei und ohne Kontakt mit dem Meßmedium schwingen kann.

Piezoelektrischen Elemente ändern ihre Abmessungen (Dicke, Durchmesser) in Abhängigkeit von einer in Polarisationsrichtung anliegenden Spannungsdifferenz. Liegt eine Wechselspannung an, so oszilliert die Dicke: Nimmt die Dicke zu, so nimmt der Durchmesser des piezoelektrischen Elementes ab; nimmt andererseits die Dicke ab, so vergrößert sich der Durchmesser des piezoelektrischen Elements entsprechend.

Aufgrund dieses Schwingungsverhaltens des piezoelektrischen Elements bewirkt die Spannungsdifferenz ein Durchbiegen der in das Gehäuse eingespannten Membran 5. Die auf der Membran 5 angeordneten Schwingstäbe des schwingfähigen Einheit 2 führen aufgrund der Schwingungen der Membran 5 gegensinnige Schwingungen um ihre Längsachse aus. Die gegensinnigen Schwingungen haben den Vorteil, daß sich die von jedem Schwingstab 3, 4 auf die Membran 5 ausgeübten Wechselkräfte gegenseitig aufheben. Hierdurch wird die mechanische Beanspruchung der Einspannung minimiert, so daß näherungsweise keine Schwingungsenergie auf das Gehäuse übertragen wird.

Das mechanische Schwingsystem, gebildet aus Antriebs-/Empfangseinheit 6, Membran 5 und schwingfähiger Einheit 2, ist in den Schwingkreis 7 eingebunden. Neben dem mechanischen Schwingsystem weist der Schwingkreis 7 auch eine elektrische Komponente auf, die großteils durch die Rückkoppelelektronik 9 verkörpert wird. Die Rückkoppelelektronik 9 kann beispielsweise so ausgebildet sein, wie sie in dem von der Anmelderin angebotenen und vertriebenen LIQUIPHANT M ausgestaltet ist. Die Rückkoppelelektronik 9 stellt periodische Signale, insbesondere Rechtecksignale zur Verfügung, die über den Booster (Verstärkerschaltung) der Antriebs-/Empfangseinheit 6 zugeführt und von dort auf die Membran 5 übertragen werden. Nachfolgend schwingt die Membran 5 mit der montierten schwingfähigen Einheit 2 mit der vorgegebenen Frequenz.

In den Schwingkreis 7 ist desweiteren der Mikroprozessor 8 integriert. Dieser Mikroprozessor 8 korrigiert als 'intelligentes' Glied die Phase der Rechtecksignale in Abhängigkeit von der Frequenz. Der jeweils einem gemessenen Frequenzwert zugehörige Phasenkorrekturwert ist in der Speichereinheit 10 abgespeichert. Der Phasenkorrekturwert kann noch von weiteren Parametern, beispielsweise der Temperatur beeinflußt werden. Deshalb ist zusätzlich ein Temperatursensor 13 vorgesehen, der Information über die Temperatur am Meßort liefert bzw. im Bereich der Rückkoppelelektronik liefert.

Das dem Mikroprozessor 8 zugeführte Eingangssignal (In) wird nicht A/D gewandelt und anschließend im Frequenzbereich gefiltert, sondern es wird im Zeitbereich verarbeitet. Hierzu führt der Mikroprozessor 8 die folgenden Schritte aus:
- in einem ersten Schritt wird z. B. anhand der aufsteigenden Flanken des rechteckförmigen Eingangssignals die Frequenz des Schwingkreises bestimmt;
- in einem zweiten Schritt wird der der bestimmten Frequenz zugeordnete Phasenkorrekturwert ermittelt;
- in einem dritten Schritt wird ein Ausgangssignal generiert, das die im zweiten Schritt ermittelte korrigierte Phase aufweist. Dieses phasenkorrigierte Signal wird im Booster 12 verstärkt und triggert die Antriebs-/Empfangseinheit 6.

Eventuell veranlaßt der Mikroprozessor neben der Phasenkorrektur auch noch eine Amplitudenkorrektur. Hierdurch erfolgt eine Gewichtung der Frequenz zur weiteren 'intelligenten' Einflußnahme. Weiterhin ist vorgesehen, daß dem Mikroprozessor 8 von der (analogen) Rückkoppelektronik 9 ein Signal geliefert wird, das amplitudenproportional zum Eingangssignal (in) ist.

In Fig. 2 ist eine graphische Darstellung des Verlaufs der Phase und der korrigierten Phase gegen die Frequenz aufgetragen. Der durchgezogene, gepunktete Graph gibt die Phase in Abhängigkeit von der Frequenz ohne Phasenkorrektur durch den Mikroprozessor 8 wieder. Die durchgezogene Linie mit den Kreuzen charakterisiert die Phase in Abhängigkeit von der Frequenz bei Phasenanpassung durch den Mikroprozessor 8. Durch die Phasenkorrektur wird im gezeigten Fall erreicht, daß die Schwingungen über den gesamten Arbeitsbereich einen konstanten Phasengang aufweisen. Im dargestellte Fall erfolgt eine Phasenkorrektur auf 0°.

Weiterhin nimmt der Mikroprozessor 8 eine Verstärkung der Ausgangssignale vor, wobei im gezeigten Fall die Verstärkung im Arbeitsbereich gleichfalls auf einen konstanten Wert geregelt ist.

Die Korrekturwerte für die Phasen in Abhängigkeit von der Frequenz sind gemäß einer vorteilhaften Weiterbildung der erfindungsgemäßen Vorrichtung in Form einer Tabelle oder in Form einer Funktion in der Speichereinheit 10 verfügbar.

Anstelle der abgespeicherten Phasenkorrekturwerte kann auch eine Online-Bestimmung der optimalen, an die tatsächlich herrschenden Gegebenheiten am Meßort angepaßten Phasenkorrekturwerte erfolgen. Dies ist in Fig. 1 durch die Bezeichnung (Ref) und die gestrichelten Linie dargestellt. Anhand eines Vergleichs der Phase des Eingangssignals (in) und der Phase des Ausgangssignals der Rückkoppelelektronik 9 ist es möglich, den aktuellen und damit optimalen Phasenkorrekturwert zu ermitteln. Hierdurch läßt sich die Zuverlässigkeit und Genauigkeit der erfindungsgemäßen Vorrichtung noch einmal erhöhen.

### Bezugszeichenliste

- 1: Füllstandsgrenzschalter
- 2: Schwingfähige Einheit
- 3: Schwingstab
- 4: Schwingstab
- 5: Membran
- 6: Antriebs-/ Empfangseinheit
- 7: Schwingkreis
- 8: Auswerteeinheit / Mikroprozessor
- 9: Rückkoppelelektronik
- 10: Speichereinheit
- 11: Booster
- 12: Eingabe-/Anzeigeeinheit
- 13: Sensor

## Patentansprüche

1. Vorrichtung zur Überwachung eines vorbestimmten Füllstands bzw. zur Bestimmung der Dichte oder der Viskosität eines Meßmediums in einem Behälter mit einer schwingfähigen Einheit (2), einer Antriebs-/Empfangseinheit (6) und einer Auswerteeinheit (8),
wobei die schwingfähige (2) Einheit auf der Höhe des vorbestimmten Füllstandes angebracht ist bzw. wobei die schwingfähige Einheit (2) so angebracht ist, daß sie bis zu einer definierten Elntauchtiefe in das Meßmedium eintaucht,
wobei eine Rückkoppelelektronik (9) vorgesehen ist, über die die Antriebs-/Empfangseinheit (6) die schwingfähige Einheit (2) zu einer Schwingung mit einer vorgegebenen Schwingfrequenz anregt,
wobei die Auswerteeinheit (8) anhand einer Frequenz- und/oder Amplitudenänderung der Schwingung der schwingfähigen Einheit (2) das Erreichen des vorbestimmten Füllstandes erkennt bzw. wobei die Auswerteeinheit (8) die Dichte oder die Viskosität des Meßmediums anhand einer Änderung der Schwingung der schwingfähigen Einheit (2) ermittelt,
**dadurch gekennzeichnet,**
**daß** ein Mikroprozessor (8) vorgesehen ist,
**daß** die schwingfähige Einheit (2), die Rückkoppelelektronik (9) und der Mikroprozessor (8) einen Schwingkreis (7) bilden, und
**daß** der Mikroprozessor (8) ein phasenkorrigiertes Ausgangssignal erzeugt, wobei der Mikroprozessor (8) die Phase des Ausgangssignals der Rückkoppelelektronik (9) über eine vorgegebene Frequenz-Bandbreite derart korrigiert, daß das Ausgangssignal des Mikroprozessors (8) eine aus der Summe der Phase des Ausgangssignals der Rückkoppelelektronik (9) und eines Phasenkorrekturwertes des Mikroprozessors (8) gebildete Phase aufweist, welche einer von der Schwingfrequenz abhängigen vorgegebenen Funktion f(v) folgt.

2. Vorrichtung nach Anspruch 1,
**dadurch gekennzeichnet,**
**daß** die Frequenz-Bandbreite in den Grenzen von 300 bis 1500 Hz liegt.

3. Vorrichtung nach Anspruch 1 oder 2,
**dadurch gekennzeichnet,**
**daß** die Phase des Ausgangssignals des Mikroprozessors (8) einer vorgegebenen Funktion f(ν) = const. folgt.

4. Vorrichtung nach Anspruch 3,
**dadurch gekennzeichnet,**
**daß** dem Mikroprozessor (8) eine Speichereinheit (10) zugeordnet ist, in der jeweils zumindest ein Korrekturwert für die Phase in Abhängigkeit von der Frequenz abgespeichert ist.

5. Vorrichtung nach Anspruch 4,
**dadurch gekennzeichnet,**
**daß** der Korrekturwert für die Phase in Abhängigkeit von der Frequenz in Form einer Tabelle oder in Form eines Rechenalgorithmus' in der Speichereinheit (10) verfügbar ist.

6. Vorrichtung nach Anspruch 1,
**dadurch gekennzeichnet,**
**daß** eine Eingabe-/Anzeigeeinheit (12) vorgesehen ist, über die die Funktion f(v) vorgebbar ist.

7. Vorrichtung nach Anspruch 1,
**dadurch gekennzeichnet,**
**daß** die Rückkoppelektronik (9) dem Mikroprozessor (8) ein periodisches, vorzugsweise ein rechteckförmiges Eingangssignal zur Verfügung stellt, das von dem Mikroprozessor (8) zur Bestimmung eines Korrekturwerts für die Phase verwendet wird.

8. Vorrichtung nach Anspruch 1 oder 7,
**dadurch gekennzeichnet,**
**daß** der Mikroprozessor (8) das von der Rückkoppelelektronik (9) gelieferte Signal im Zeitbereich auswertet und weiter verarbeitet.

9. Vorrichtung nach Anspruch 7,
**dadurch gekennzeichnet,**
**daß** der Mikroprozessor (8) in einem ersten Schritt anhand der Flanken des rechteckförmigen Eingangssignals (in) die Frequenz des Schwingkreises (7) bestimmt,
**daß** der Mikroprozessor (8) in einem zweiten Schritt den der bestimmten Frequenz zugeordnete Phasenkorrekturwert ermittelt, und
**daß** der Mikroprozessor (8) ein Ausgangssignal mit der unter Schritt zwei ermittelten korrigierten Phase ausgibt.

10. Vorrichtung nach Anspruch 1,
**dadurch gekennzeichnet,**
**daß** der Mikroprozessor (8) die Frequenz der Schwingungen über mehrere Perioden des Eingangssignals (in) ermittelt und eine in einer Frequenzgewichtung ermittelte Frequenz ausgibt.

11. Vorrichtung nach Anspruch 1,
**dadurch gekennzeichnet,**
**daß** eine Verstärkerschaltung (11) vorgesehen ist, über die das Ausgangssignal (out) des Mikroprozessors (8) der Antriebseinheit (6) für die schwingfähige Einheit (2) zugeleitet wird.

12. Vorrichtung nach Anspruch 1,
**dadurch gekennzeichnet,**
**daß** der Mikroprozessor (8) zusätzlich die Aufgaben der Auswerteeinheit übemimmt und das Erreichen des vorbestimmten Füllstands ermittelt oder die Viskosität oder die Dichte des Meßmediums ermittelt.

13. Vorrichtung nach Anspruch 7 oder 11,
**dadurch gekennzeichnet,**
**daß** die Rückkoppelelektronik (9) dem Mikroprozessor (8) ein Signal zur Verfügung stellt, das amplitudenproportional zum Eingangssignal (in) ist.

14. Vorrichtung nach Anspruch 1 oder 4,
**dadurch gekennzeichnet,**
**daß** ein weiterer Sensor zur Messung einer Prozeßgröße, z. B. ein Temperatursensor (13) vorgesehen ist, der dem Mikroprozessor Information hinsichtlich der Prozeßgröße, z. B. hinsichtlich der Temperatur bereitstellt, und
**daß** der Mikroprozessor den Einfluß der Prozeßgröße bei der Bereitstellung eines Korrekturwertes für die Phase berücksichtigt.

## Claims

1. Apparatus designed to monitor a predefined level or to determine the density or viscosity of a medium under measurement in a container with a unit capable of vibration (2), a drive/receiver unit (6) and an evaluation unit (8),
wherein said unit capable of vibration (2) is attached at the height of the predefined level or wherein said unit capable of vibration (2) is attached in such a way that it is immersed in the medium under measurement up to a defined immersion depth,
wherein feedback electronics (9) are provided via which the drive/receiver unit (6) excites the unit capable of vibration (2) to vibrate at a predefined vibration frequency,
wherein the evaluation unit (8) recognizes that the predefined level has been reached on the basis of a change in the frequency and/or change in the amplitude of the vibration of the unit capable of vibration (2), or wherein the evaluation unit (8) determines the density or the viscosity of the medium under measurement on the basis of a change in the vibration of the unit capable of vibration (2),
**characterized in that**
a microprocessor (8) is provided,
the unit capable of vibration (2), the feedback electronics (9) and the microprocessor (8) form a vibration circuit (7), and
the microprocessor (8) generates a phase-corrected output signal, wherein the microprocessor (8) corrects the phase of the output signal of the feedback electronics (9) through a predefined frequency bandwidth in such a way that the output signal of the microprocessor (8) presents a phase - formed from the sum of the phase of the output signal of the feedback electronics (9) and a phase correction value of the microprocessor (8) - which follows a predefined function f(v) which depends on the frequency of the vibration.

2. Apparatus as claimed in Claim 1,
**characterized in that**
the frequency bandwidth is within the range from 300 to 1500 Hz.

3. Apparatus as claimed in Claim 1 or 2,
**characterized in that**
the phase of the output signal of the microprocessor (8) follows a predefined function f(v) = const.

4. Apparatus as claimed in Claim 3,
**characterized in that**
the microprocessor (8) is assigned a memory unit (10) which stores at least one correction value for the phase depending on the frequency.

5. Apparatus as claimed in Claim 4,
**characterized in that**
the phase correction value as a function of the frequency is available in the form of a table or in the form of an algorithm in the memory unit (10).

6. Apparatus as claimed in Claim 1,
**characterized in that**
an input/display unit (12) is provided via which the function f(v) can be predefined.

7. Apparatus as claimed in Claim 1,
**characterized in that**
the feedback electronics (9) provide the microprocessor (8) with a periodic, preferably rectangular, input signal, which the microprocessor (8) uses to determine a correction value for the phase.

8. Apparatus as claimed in Claim 1 or 7,
**characterized in that**
the microprocessor (8) evaluates the signal delivered by the feedback electronics (9) in the time period and processes it further.

9. Apparatus as claimed in Claim 7,
**characterized in that**
in a first step the microprocessor (8) determines the frequency of the vibration circuit (7) using the edges of the rectangular input signal (in),
in a second step the microprocessor (8) determines the phase correction value assigned to the frequency determined, and
the microprocessor (8) outputs an output signal with the corrected phase determined in the second step.

10. Apparatus as claimed in Claim 1,
**characterized in that**
the microprocessor (8) determines the frequency of the vibrations over multiple periods of the input signal (in) and outputs a frequency determined in a frequency weighting.

11. Apparatus as claimed in Claim 1,
**characterized in that**
an amplifier circuit (11) is provided via which the output signal (out) of the microprocessor (8) is routed to the drive unit (6) for the unit capable of vibration (2).

12. Apparatus as claimed in Claim 1,
**characterized in that**
the microprocessor (8) also assumes the tasks of the evaluation unit and determines when the predefined level is reached or determines the viscosity or density of the medium under measurement.

13. Apparatus as claimed in Claim 7 or 11,
**characterized in that**
the feedback electronics (9) provide the microprocessor (8) with a signal which is proportional in terms of amplitude to the input signal (in).

14. Apparatus as claimed in Claim 1 or 4,
**characterized in that**
an additional sensor, such as a temperature sensor (13), is provided to measure a process variable which supplies the microprocessor with information about a process variable, such as the temperature, and **in that** the microprocessor takes the effect of the process variable into account when making a correction value available for the phase.

## Revendications

1. Dispositif destiné à la surveillance d'un niveau déterminé ou à la détermination de la densité ou de la viscosité d'un produit mesuré dans un réservoir avec une unité apte à vibrer (2), une unité d'entraînement / de réception (6) et une unité d'exploitation (8), l'unité apte à vibrer (2) étant disposée à la hauteur du niveau de remplissage prédéfini, ou l'unité apte à vibrer étant disposée de telle manière à ce qu'elle soit immergée dans le produit à mesurer jusqu'à une profondeur d'immersion définie,
pour lequel est prévue une électronique de rétroaction (9), par l'intermédiaire de laquelle l'unité d'entraînement / de réception (6) excite l'unité apte à vibrer (2) en une vibration avec une fréquence de vibration prédéfinie,
pour lequel l'unité d'exploitation (8) reconnaît au moyen d'un changement de fréquence et/ou d'amplitude de la vibration de l'unité apte à vibrer (2) l'atteinte du niveau de remplissage prédéfini, ou pour lequel l'unité d'exploitation (8) détermine la densité ou la viscosité du produit à mesurer au moyen d'un changement de la vibration de l'unité apte à vibrer (2),
**caractérisé en ce**
**qu'**est prévu un microprocesseur (8),
**que** l'unité apte à vibrer (2), l'électronique de rétroaction (9) et le microprocesseur (8) forment un circuit de vibration (7), et en ce que le microprocesseur (8) génère un signal de sortie à phase corrigée, le microprocesseur (8) corrigeant la phase du signal de sortie de l'électronique de rétroaction (9) par le biais d'une largeur de bande de fréquence, de telle sorte que le signal de sortie du microprocesseur (8) présente une phase formée par la somme de la phase du signal de sortie de l'électronique de rétroaction (9) et d'une valeur de correction de phase du microprocesseur (8), laquelle phase suit une fonction f(v) prédéfinie dépendant de la fréquence de vibration.

2. Dispositif selon la revendication 1,
**caractérisé en ce**
**que** la largeur de bande de fréquence se situe dans les limites de 300 à 1 500 Hz.

3. Dispositif selon la revendication 1 ou 2,
**caractérisé en ce**
**que** la phase du signal de sortie du microprocesseur (8) suit une fonction prédéfinie f(v) = const.

4. Dispositif selon la revendication 3,
**caractérisé en ce**
**que** le microprocesseur (8) est attribué à une unité de mémoire (10), dans laquelle est mémorisée au moins une valeur de correction de la phase en fonction de la fréquence.

5. Dispositif selon la revendication 4,
**caractérisé en ce**
**que** la valeur de correction de la phase en fonction de la fréquence est disponible sous la forme d'une table ou sous la forme d'un algorithme de calcul dans l'unité de mémoire (10).

6. Dispositif selon la revendication 1,
**caractérisé en ce**
**qu'**est prévue une unité d'entrée / d'affichage (12), par l'intermédiaire de laquelle la fonction f(v) est prédéfinissable.

7. Dispositif selon la revendication 1,
**caractérisé en ce**
**que** l'électronique de rétroaction (9) met à la disposition du microprocesseur (8) un signal d'entrée périodique, de préférence rectangulaire, lequel est utilisé par le microprocesseur (8) pour déterminer une valeur de correction de la phase.

8. Dispositif selon la revendication 1 ou 7,
**caractérisé en ce**
**que** le microprocesseur (8) exploite dans le domaine temporel le signal délivré par l'électronique de rétroaction (9), et le traite.

9. Dispositif selon la revendication 7,
**caractérisé en ce**
**que** le microprocesseur (8) détermine, dans une première étape, au moyen des fronts du signal d'entrée (in) rectangulaire, la fréquence du circuit de vibration (7),
**que** le microprocesseur (8) détermine, dans une deuxième étape, la valeur de correction de phase attribuée à la fréquence déterminée, et en ce que le microprocesseur (8) émet un signal de sortie avec la phase corrigée, déterminée dans la deuxième étape.

10. Dispositif selon la revendication 1,
**caractérisé en ce**
**que** le microprocesseur (8) détermine la fréquence des vibrations sur plusieurs périodes du signal d'entrée (in) et émet une fréquence déterminée dans le cadre d'une pondération de fréquence.

11. Dispositif selon la revendication 1,
**caractérisé en ce**
**qu'**est prévu un circuit amplificateur (11), par l'intermédiaire duquel le signal de sortie (out) du microprocesseur (8) est acheminé à l'unité d'entraînement (6) pour l'unité apte à vibrer (2).

12. Dispositif selon la revendication 1,
**caractérisé en ce**
**que** le microprocesseur (8) prend en charge en plus les tâches de l'unité d'exploitation et détermine l'atteinte du niveau de remplissage prédéfini, ou détermine la viscosité ou la densité du produit à mesurer.

13. Dispositif selon la revendication 7 ou 11,
**caractérisé en ce**
**que** l'électronique de rétroaction (9) met à la disposition du microprocesseur (8) un signal, qui est proportionnel à l'amplitude du signal d'entrée (in).

14. Dispositif selon la revendication 1 ou 4,
**caractérisé en ce**
**qu'**est prévu un autre capteur destiné à la mesure d'une grandeur process, par exemple un capteur de température (13), qui met à la disposition du microprocesseur une information concernant la grandeur process, par exemple concernant la température, et en ce que le microprocesseur prend en compte l'influence de la grandeur process lors de la mise à disposition d'une valeur de correction pour la phase.
